# EUROPÄISCHE PATENTSCHRIFT

(11) **EP 4 425 854 B1**
(45) Veröffentlichungstag und Bekanntmachung des Hinweises auf die Patenterteilung: **10.06.2026**
(21) Anmeldenummer: 24155795.8
(22) Anmeldetag: 05.02.2024
(51) Int. Cl.: H04L 12/46

(54) **NACHBILDEN EINES NETZWERKS MITTELS EINES NETZWERKSCHALTERS**
NETWORK MODELLING USING A NETWORK SWITCH
ILLUSTRATION D'UN RÉSEAU À L'AIDE D'UN COMMUTATEUR DE RÉSEAU

(30) Priorität: 28.02.2023 DE 102023201787
(43) Veröffentlichungstag der Anmeldung: 04.09.2024
(73) Patentinhaber: Siemens Mobility GmbH, 80997 München (DE)
(72) Erfinder: Neite, Rudolf, 91301 Forchheim (DE); Zirkler, Andreas, 85521 Ottobrunn (DE)
(74) Vertreter: Siemens Patent Attorneys

(56) Entgegenhaltungen:
- US-A1- 2009 059 803
- US-A1- 2012 030 394
- US-A1- 2014 269 306

## Beschreibung

Die Erfindung betrifft ein Netzwerksystem, ein Fahrzeug mit diesem Netzwerksystem, ein Verfahren zum Betrieb des Netzwerksystems, ein Computerprogramm sowie ein computerlesbares Medium.

Eine Netzwerktopologie sowie zugehörige Netzwerkprotokolle eines Netzwerks werden üblicherweise im Hinblick auf einen Anwendungs- und Verwendungszweck gewählt. So unterscheiden sich Netzwerke, welche zum Zwecke einer Übertragung von Daten eingerichtet sind, von Netzwerken mittels welchen Steuerungsfunktionen realisiert werden, wie beispielsweise eine Steuerung von Beleuchtungseinrichtungen oder eine Steuerung einer raumlufttechnischen Anlage. Daher ist es erforderlich, für verschiedene Anwendungsfälle jeweils eigene Netzwerke mit eigenen Netzwerkteilnehmern sowie zugehörigen Verbindungsleitungen vorzusehen. Dadurch entsteht ein hoher Installationsaufwand.

Betrachtet man beispielhaft ein schienengebundenes Fahrzeug mit mehreren Waggons, so tritt die vorgenannte Problematik besonders deutlich hervor. Bei schienengebundenen Fahrzeugen besteht ein großer Bedarf an Netzwerken für unterschiedliche Anwendungsfälle. Beispielsweise sind verschiedene Netzwerke zum Zwecke einer Übertragung von Daten, wie Mediendaten oder Prozessdaten, zum Zwecke einer Steuerung von Betriebskomponenten, wie Türen, Beleuchtungseinrichtungen oder raumlufttechnischen Anlagen, oder zum Zwecke einer Kommunikation zwischen verschiedenen Fahrzeugen eines Zugverbands vorgesehen. Dabei werden je nach Bedarf und gemäß einer Relevanz der zu übertragenden Daten verschiedene Netzwerktopologien sowie zugehörige Netzwerkprotokolle gewählt. Beispielhaft werden in einem schienengebundenen Fahrzeug gegenwärtig im Wesentlichen drei verschiedene Arten von Netzwerken installiert. Eines dieser Netzwerke betrifft unter anderem eine zeitkritische Datenkommunikation. Dieses Netzwerk wird Train-Communication-Netzwerk genannt. Ein weiteres Netzwerk wird üblicherweise Train-Operation-Netzwerk genannt und betrifft die Übertragung von Daten, wie beispielsweise Aufzeichnungen von Videoüberwachungsanlagen. Zudem ist üblicherweise ein Ethernet-Train-Backbone-Netzwerk vorgesehen, mittels welchem eine Kommunikation zwischen verschiedenen Fahrzeugen eines Zugverbands realisiert wird. Jedes der genannten Netzwerke erfordert an einem Übergang zwischen zwei benachbarten Fahrzeugabschnitten eines Fahrzeugs zumindest zwei Verbindungsleitungen. Auf diese Weise werden dabei zumindest sechs Verbindungskabel benötigt, um Netzwerkabschnitte der vorbeschriebenen Netzwerke miteinander zu verbinden. Bislang ist es jedoch nicht möglich diese Anzahl an Verbindungsleitungen unter Beibehaltung einer erforderlichen Leistungsfähigkeit der einzelnen Netzwerke zu reduzieren. Insbesondere besteht das Problem darin, dass das im Train-Operation-Netzwerk verwendete Redundanzverfahren im Hinblick auf Umschaltzeiten im Falle eines Ausfalls eines Netzwerkschalters zu langsam ist. Zudem bietet das Train-Operation-Netzwerk keine ausreichend definierten und reproduzierbaren Zustände, um die Anforderung an eine Datenübertragung zu erreichen, wie diese mittels des Train-Communication-Netzwerks erreicht wird.

Das Dokument US 2009/0059803 A1 beschreibt eine Netzwerkinfrastruktur, welche eine Konnektivität zwischen einem Subnetz und einem Hauptnetzwerk (z.B. dem Internet) möglichst ausfallsicher herstellen soll. Es beschreibt den Einsatz eines ATM-basierten Backbones, in den Ethernet-basierte Kundennetzwerke mittels LAN-Emulation integriert werden. Die Kommunikation wird u.a. durch den Einsatz mehrfach redundanter Hardwarekomponenten gewährleistet.

Aufgabe der Erfindung ist es, ein verbessertes Netzwerksystem sowie ein verbessertes Verfahren zum Zwecke eines Betriebs dieses Netzwerksystems bereitzustellen.

Diese Aufgabe wird gelöst mit einem Netzwerksystem gemäß den Merkmalen des unabhängigen Anspruchs 1.

Des Weiteren wird die vorgenannte Aufgabe gelöst durch ein Verfahren des unabhängigen Anspruchs 7.

Des Weiteren liegt der Erfindung die Aufgabe zugrunde, ein Fahrzeug mit einem Netzwerksystem bereitzustellen.

Diese Aufgabe wird gelöst mit einem Fahrzeug gemäß Anspruch 5.

Darüber hinaus liegen der Erfindung die Aufgaben zugrunde, ein Computerprogramm anzugeben sowie ein computerlesbares Medium bereitzustellen.

Diese Aufgaben werden gelöst mittels eines Computerprogramms gemäß Anspruch 13 sowie mittels eines computerlesbaren Mediums gemäß Anspruch 14. Vorteilhafte Weiterbildungen sind jeweils Gegenstand abhängiger Unteransprüche.

Das erfindungsgemäße Netzwerksystem weist ein Netzwerk erster Art auf. Des Weiteren weist das erfindungsgemäße Netzwerksystem ein Netzwerk zweiter Art auf, welches in mehrere voneinander getrennte Netzwerkabschnitte aufgeteilt ist. Diese Netzwerkabschnitte sind mittels wenigstens eines Netzwerkschalters des Netzwerks erster Art zum Zwecke eine Datenübertragung miteinander verbunden. Vorzugsweise ist der zumindest eine Netzwerkschalter des Netzwerks erster Art dazu eingerichtet, ein Netzwerk zweiter Art nachzubilden. Besonders bevorzugt ist der zumindest eine Netzwerkschalter des Netzwerks erster Art dazu eingerichtet, ein Netzwerkprotokoll und/oder eine Netzwerktopologie eines Netzwerks zweiter Art nachzubilden. Bei dem genannten Netzwerk erster Art sowie bei dem genannten Netzwerk zweiter Art handelt sich insbesondere um ein Ethernet-Netzwerk. Im vorliegenden Zusammenhang unterscheidet sich das Netzwerk erster Art von einem Netzwerk zweiter Art zumindest dadurch, dass verschiedene Redundanzprotokolle verwendet werden.

Das erfindungsgemäße Netzwerksystem ermöglicht eine aufwandsgünstige Konvergenz eines bestehenden Netzwerks mit neuen Netzwerktechniken. Beispielsweise können Netzwerkabschnitte von bestehenden Netzwerken einfach in eine neue Netzwerktechnik eingebunden werden.

Erfindungsgemäß sind weiterhin mehrere Netzwerke zweiter Art vorgesehen, welche jeweils mehrere voneinander getrennte Netzwerkabschnitte aufweisen. Dabei ist es vorgesehen, dass die mehreren voneinander getrennten Netzwerkabschnitte der mehreren Netzwerke zweiter Art mittels wenigstens eines Netzwerkschalters des Netzwerks erster Art zum Zwecke eine Datenübertragung miteinander verbunden sind. Bevorzugt sind dabei Netzwerkabschnitte eines der mehreren Netzwerke zweiter Art mittels wenigstens eines Netzwerkschalters des Netzwerks erster Art miteinander verbunden. Dies ermöglicht es, verschiedene, bereits bestehende Netzwerke einfach in ein übergeordnetes Netzwerk zu integrieren, welches eine einheitliche Netzwerktopologie aufweist und verschiedene Anforderungen an eine Umschaltzeit oder definierte und reproduzierbare Zustände erfüllen kann.

Eine weitere vorteilhafte Weiterbildung sieht vor, dass die Netzwerkschalter des Netzwerks erster Art gemäß einer H-Topologie miteinander verbunden sind. Unter der genannten Topologie soll im vorliegenden Zusammenhang eine Netzwerktopologie verstanden werden, bei welcher die Signalwege sowie die Leitungswege miteinander übereinstimmen. Eine H-Topologie ist auch als Leiter-Topologie oder im englischen Sprachraum als "ladder-topology" bekannt. Dies ermöglicht es, ein zuverlässiges und robustes Netzwerksystem bereitzustellen. Besonders vorteilhaft kann dies unter Anwendung eines speziell für eine H-Topologie entwickelten Redundanzprotokolls realisiert werden, wie dies beispielsweise in DE 10 2021 210 917 A1 beschrieben ist. Insbesondere können so besonders kurze Umschaltzeiten sowie definierte, reproduzierbare Zustände des Netzwerks erster Art realisiert werden. Bereits bestehende Netzwerke können so einfach und aufwandsgünstig in die H-Topologie eingebunden werden.

Ferner sieht eine vorteilhafte Weiterbildung vor, dass eine Netzwerktopologie des Netzwerks zweiter Art verschieden ist von einer Netzwerktopologie des Netzwerks erster Art. Dabei ist denkbar, dass das Netzwerk zweiter Art eine Ring-Topologie, eine Stern-Topologie, eine Linien-Topologie, eine Baum-Topologie oder eine Bus-Topologie sowie andere teilvermaschte oder vollvermaschte Topologien aufweist. Dies ermöglicht es, vorteilhafte Eigenschaften eines Netzwerks mit einer von der Netzwerktopologie des Netzwerks erster Art abweichenden Netzwerktopologie beizubehalten und dennoch mit diesem zu kombinieren.

Ferner sieht eine vorteilhafte Weiterbildung vor, dass zwei Netzwerkabschnitte der mehreren voneinander getrennten Netzwerkabschnitte eines Netzwerks zweiter Art mittels wenigstens zwei Netzwerkschaltern des Netzwerks erster Art miteinander verbunden sind. Auf diese Weise kann eine hohe Verfügbarkeit des Netzwerksystems bereitgestellt werden. Zudem ermöglicht dies eine vereinfachte Anbindung an das Netzwerk erster Art.

Des Weiteren wird vorgeschlagen, dass das erfindungsgemäße Netzwerksystem Teil eines Fahrzeugs ist. Vorzugsweise handelt es sich bei dem genannten Fahrzeug um ein schienengebundenes Fahrzeug.

Dabei weist das Fahrzeug mehrere Fahrzeugabschnitte auf. In jedem der mehreren Fahrzeugabschnitte ist jeweils wenigstens ein Netzwerkschalter des Netzwerks erster Art des genannten Netzwerkssystems angeordnet. Bei dem genannten Netzwerkschalter handelt es sich insbesondere um den zuvor im Zusammenhang mit dem Netzwerksystem bereits beschriebenen Netzwerkschalter. Des Weiteren ist in jedem der mehreren Fahrzeugabschnitte jeweils ein Netzwerkabschnitt der mehreren voneinander getrennten Netzwerkabschnitte des Netzwerks zweiter Art des vorher beschriebenen Netzwerksystems angeordnet. Auf diese Weise kann auf einfache Weise eine Konvergenz verschiedener auf einem Fahrzeug angeordneter Netzwerke erreicht werden. Des Weiteren kann so eine Anzahl an Verbindungsleitungen zwischen benachbarten Fahrzeugabschnitten des Fahrzeugs reduziert werden. Im Falle eines schienengebundenen Fahrzeugs, welches mehrere Waggons als Fahrzeugabschnitte aufweist, kann insbesondere eine Anzahl an Verbindungsleitungen zwischen benachbarten Waggons reduziert werden.

Eine vorteilhafte Weiterbildung des Fahrzeugs betrifft eine Verbindung eines in einem ersten Fahrzeugabschnitt angeordneten Netzwerkabschnitts des Netzwerks zweiter Art mit einem in einem unmittelbar zu diesem Fahrzeugabschnitt benachbart angeordneten weiteren Fahrzeugabschnitt des Fahrzeugs, in welchem ein weiterer Netzwerkabschnitt des Netzwerks zweiter Art angeordnet ist. Diese Weiterbildung des Fahrzeugs sieht vor, dass die genannten Netzwerkabschnitte mittels Netzwerkschalter des Netzwerks erster Art miteinander verbunden sind. Dabei ist wenigstens ein erster Netzwerkschalter des Netzwerks erster Art in einem ersten Fahrzeugabschnitt angeordnet und wenigstens ein weiterer Netzwerkschalter des Netzwerks erster Art in einem zu dem genannten ersten Fahrzeugabschnitt benachbarten weiteren Fahrzeugabschnitt angeordnet. Mittels einer Verbindung der genannten Netzwerkschalter sind dabei die genannten Netzwerkabschnitte zum Zwecke einer Datenübertragung verbunden. Verbindungsleitungen zwischen den genannten Fahrzeugabschnitten können so auf Verbindungsleitungen zwischen den Netzwerkschaltern des Netzwerks erster Art reduziert werden. Im Falle einer H-Topologie des Netzwerks erster Art kann so eine Anzahl an Verbindungsleitungen zwischen benachbarten Fahrzeugabschnitten auf zwei Verbindungsleitungen reduziert werden. Dies ermöglicht es, einen Montageaufwand sowie damit im Zusammenhang stehende Kosten erheblich zu senken. Zweckmäßigerweise sind Netzwerkabschnitte von Netzwerken zweiter Art, welche jeweils in unmittelbar benachbarten Fahrzeugabschnitten angeordnet sind, ausschließlich mittels Netzwerkschaltern des Netzwerks erster Art miteinander verbunden.

Mittels des erfindungsgemäßen Verfahrens kann das erfindungsgemäße Netzwerksystem betrieben werden.

Das erfindungsgemäße Verfahren sieht vor, dass mittels des wenigstens einen Netzwerkschalters des Netzwerks erster Art des erfindungsgemäßen Netzwerksystems ein Netzwerk zweiter Art nachgebildet wird. Das genannte Nachbilden soll dabei im vorliegenden sowie im folgenden Zusammenhang mittels eines Emulators im Sinne der Computertechnik realisiert werden. Bevorzugt ist dabei der wenigstens eine Netzwerkschalter des Netzwerks erster Art als ein Emulator ausgebildet.

Dies ermöglicht es, bestehende Netzwerke besonders einfach und aufwandsgünstig in übergeordnete Netzwerke zu integrieren. Insbesondere können so bestehende Netzwerke mit neuen Netzwerktechnologien kombiniert werden. Des Weiteren kann so auf einfache Weise eine Konvergenz zwischen verschiedenen Netzwerken realisiert werden.

Eine vorteilhafte Weiterbildung des Verfahrens sieht vor, dass zum Zwecke eines Nachbildens des Netzwerks zweiter Art mittels des wenigstens einen Netzwerkschalters des Netzwerks erster Art Netzwerkprotokolle des Netzwerks zweiter Art nachgebildet werden. Eine Arbeitsweise des Netzwerks zweiter Art kann auf diese Weise trotz Einbindung in das Netzwerk erster Art unverändert fortgeführt werden. Auf eine Anpassung von Netzwerkprotokollen des Netzwerks zweiter Art kann daher verzichtet werden.

Eine vorteilhafte Ausführungsvariante des erfindungsgemäßen Verfahrens sieht vor, dass zum Zwecke eines Nachbildens des Netzwerks zweiter Art mittels des wenigstens einen Netzwerkschalters des Netzwerks erster Art Redundanzprotokolle des Netzwerks zweiter Art nachgebildet werden. Beispielhaft wird mittels des Netzwerkschalters des Netzwerks erster Art ein STP-Protokoll, ein RSTP-Protokoll, ein MSTP-Protokoll oder ein MRP-Protokoll nachgebildet. Bei dem genannten STP-Protokoll handelt es sich vorliegend um das dem Fachmann bereits bekannte Spannbaumprotokoll, welches auch als "spanning-tree-protocol"(STP) bekannt ist und dem Zweck dient, ein beliebig vermaschtes Ethernet-Netzwerk in eine Baum-Topologie zu überführen. Bei dem RSTP-Protokoll und dem MSTP-Protokoll handelt es sich um dem Fachmann bereits bekannte auf dem STP-Protokoll basierende Weiterentwicklungen. Dabei steht das Akronym RSTP für "rapid-spanning-tree-protocol" und das Akronym MSTP für "multiple-spanning-tree-protocol". Das genannte MRP-Protokoll betrifft das in den betreffenden Fachkreisen bekannte Redundanzprotokoll "media-redundancy-protocol", welches üblicherweise im Falle einer Ring-Topologie Anwendung findet. Dies ermöglicht eine einfache Anbindung von Train-Communication-Netzwerken, Train-Operation-Netzwerken sowie eines Ethernet-Train-Backbone-Netzwerks an das Netzwerk erster Art. Beispielsweise können so bestehende, auf Profinet basierende Netzwerke einfach an eine H-Topologie angebunden werden.

Eine weitere vorteilhafte Weiterbildung des Verfahrens sieht vor, dass zum Zwecke eines Nachbildens des Netzwerks zweiter Art mittels des wenigstens einen Netzwerkschalters des Netzwerks erster Art eine Netzwerktopologie des Netzwerks zweiter Art nachgebildet wird. Eine Kommunikation zwischen Netzwerkabschnitten des Netzwerks zweiter Art kann auf diese Weise einfach und aufwandsgünstig mittels des Netzwerks erster Art realisiert werden.

Zum Zwecke eines Nachbildens der Netzwerktopologie eines Netzwerks zweiter Art mittels des wenigstens einen Netzwerkschalters ist es denkbar, dass ein Redundanzmanager, ein RSTP-Netzwerkschalter, ein MSTP-Netzwerkschalter, ein Access-Netzwerkschalter und/oder ein Ethernet-Train-Backbone-Netzwerkschalter nachgebildet wird. Dies ermöglicht es, auf besonders flexible Weise eine Vielzahl an verschiedenen bereits bestehenden Netzwerken an das Netzwerk erster Art anzubinden. Beispielhaft können so auf einfache Weise sowohl Netzwerkabschnitte eines Ethernet-Train-Backbone-Netzwerks, eines Train-Operation-Netzwerks und/oder eines Train-Communication-Netzwerks an die beispielhaft genannte H-Topologie angebunden werden.

Des Weiteren wird als vorteilhafte Weiterbildung des Verfahrens vorgeschlagen, dass wenigstens zwei Netzwerkschalter des Netzwerks erster Art zum Zwecke eines Nachbildens des Netzwerks zweiter Art vorgesehen werden. Dies ermöglicht es, auf einfache Weise eine Verfügbarkeit und damit eine Betriebssicherheit des Verfahrens zu steigern.

Ferner sieht die Erfindung ein Computerprogramm vor, welches bei dessen Ausführung das erfindungsgemäße Netzwerksystem dazu veranlasst, das erfindungsgemäße Verfahren durchzuführen.

Zudem ist ein Computerprogramm vorgesehen, welches bei dessen Ausführung das erfindungsgemäße Netzwerksystem des Fahrzeugs dazu veranlasst, das erfindungsgemäße Verfahren durchzuführen.

Darüber hinaus wird ein computerlesbares Medium vorgeschlagen, welches Instruktionen aufweist. Auf Basis dieser Instruktionen wird das erfindungsgemäße Netzwerksystem dazu veranlasst, das erfindungsgemäße Verfahren durchzuführen.

In einer vorteilhaften Weiterbildung weist das computerlesbare Medium Instruktionen auf, welche das erfindungsgemäße Netzwerksystem des Fahrzeugs dazu veranlassen, das erfindungsgemäße Verfahren durchzuführen.

Bei dem vorgenannten computerlesbaren Medium kann es sich beispielsweise um eine CD-ROM, eine DVD, einen USB- oder Flash-Speicher oder um ein nicht körperliches Medium, wie ein Datenstrom und/oder ein Datenträgersignal handeln.

Es zeigen:
- FIG 1: ein Ausführungsbeispiel eines Fahrzeugs mit einem erfindungsgemäßen Netzwerksystem in einer schematischen Darstellung sowie eine schematische Illustration eines Beispiels des erfindungsgemäßen Verfahrens;
- FIG 2: ein Ausschnitt des Ausführungsbeispiels des erfindungsgemäßen Netzwerksystems in einer schematischen Darstellung sowie eine schematische Illustration des Beispiels des erfindungsgemäßen Verfahrens.

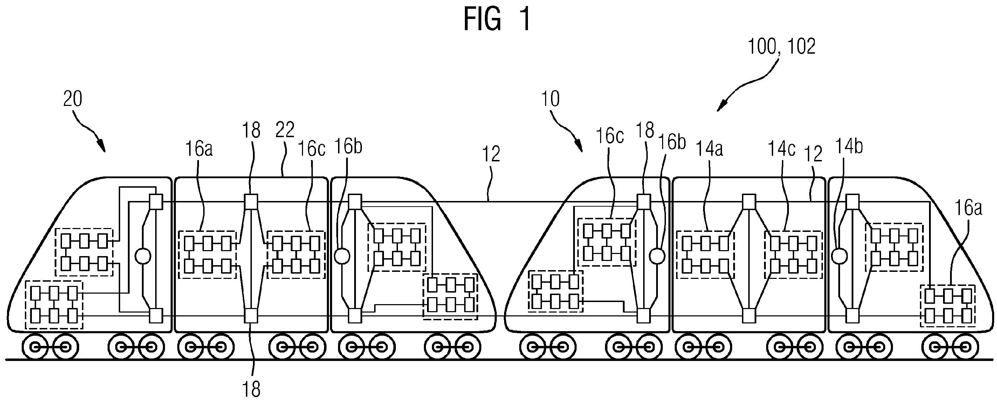

FIG 1 zeigt ein schienengebundenes Fahrzeug 20 in einer schematischen Darstellung. Das schienengebundene Fahrzeug 20 weist mehrere Fahrzeugabschnitte 22 auf. Beispielhaft entsprechen die Fahrzeugabschnitte 22 jeweils einem Waggon oder einem Triebwagen des schienengebundenen Fahrzeugs 20. Des Weiteren weist das schematisch in FIG 1 gezeigte schienengebundene Fahrzeug 20 ein Ausführungsbeispiel eines Netzwerksystems 10 auf.

Dieses Netzwerksystem 10 weist ein Netzwerk erster Art 12 mit mehreren Netzwerkschaltern 18 auf. Beispielhaft sind diese Netzwerkschalter 18 derart miteinander verbunden, dass diese eine H-Topologie bilden. Eine solche H-Topologie ist im englischen Sprachraum auch als "ladder-topology" bekannt. Im Rahmen des vorliegenden Ausführungsbeispiels wird das Netzwerk erster Art 12 mittels eines speziell für eine H-Topologie entwickelten Redundanzprotokolls betrieben. Ein solches Redundanzprotokoll ist beispielsweise aus DE 10 2021 210 917 A1 bekannt.

Im vorliegend beschriebenen Ausführungsbeispiel sind jeweils zwei Netzwerkschalter 18 des Netzwerks erster Art 12 in einem Fahrzeugabschnitt 22 des schienengebundenen Fahrzeugs 20 angeordnet. Damit sind lediglich zwei Verbindungsleitungen zwischen unmittelbar benachbarten Fahrzeugabschnitten 22 zum Zwecke einer Verbindung von Netzwerkteilnehmern des Netzwerks erster Art 12 erforderlich.

Des Weiteren weist das Ausführungsbeispiel des Netzwerksystems 10 drei Netzwerke zweiter Art 14a, 14b, 14c auf. Die genannten Netzwerke zweiter Art 14a, 14b, 14c unterscheiden sich von dem Netzwerk erster Art 12 zumindest dadurch, dass diese mit anderen Redundanzprotokollen betrieben werden als das Netzwerk erster Art 12.

Ein erstes Netzwerk zweiter Art 14a ist als ein Train-Communication-Netzwerk des Fahrzeugs 20 ausgebildet. Die Netzwerkschalter des Train-Communication-Netzwerks sind gemäß einer Ring-Topologie miteinander verbunden. Beispielhaft wird das Train-Communication-Netzwerk mittels des Profinet-Standards betrieben. Als Redundanzprotokoll wird dabei ein "media-redundancy-protocol" (MRP) angewandt.

Bei einem zweiten Netzwerk zweiter Art 14b handelt es sich beispielhaft um ein Ethernet-Train-Backbone-Netzwerk. Das ETB dient dem Zweck der Kommunikation innerhalb eines Zugverbandes aus zusammengesetzten Einzelfahrzeugen. Dabei sind beispielhaft in jedem Einzelfahrzeug des Zugverbandes zwei Ethernet-Train-Backbone-Netzwerkschalter angeordnet. Im vorliegenden Ausführungsbeispiel ist jeder der genannten Ethernet-Train-Backbone-Netzwerkschalter mit zwei Netzwerkschaltern 18 des Netzwerks erster Art an die H-Topologie angebunden. Als Redundanzprotokoll wird dabei ein "spanning-tree-protocol" (STP) oder eine Weiterbildung davon, wie beispielsweise MSTP oder RSTP, implementiert.

Ferner ist im vorliegenden Ausführungsbeispiel als drittes Netzwerk zweiter Art 14c ein Train-Operation-Netzwerk vorgesehen. Beispielhaft sind Netzwerkschalter des Train-Operation-Netzwerks gemäß einer H-Topologie angeordnet. Allerdings ist im Gegensatz zu dem Netzwerk erster Art 12 als Redundanzprotokoll ein STP oder eine darauf aufbauende Weiterbildung vorgesehen.

Die genannten drei Netzwerke zweiter Art 14a, 14b, 14c sind des Weiteren jeweils in zunächst voneinander getrennte Netzwerkabschnitte 16a, 16b, 16c aufgeteilt. Dabei ist in jedem der genannten Fahrzeugabschnitte 22 jeweils einer der genannten Netzwerkabschnitte 16a, 16b, 16c eines jeden der drei Netzwerke zweiter Art 14a, 14b, 14c angeordnet. Alle sich jeweils in einem Fahrzeugabschnitt 22 befindlichen Netzwerkabschnitte 16a, 16b, 16c sind mittels der zwei in dem zugehörigen Fahrzeugabschnitt 22 angeordneten Netzwerkschalter 18 des Netzwerks erster Art 12 miteinander verbunden. Auf diese Weise sind die jeweilige Netzwerkabschnitte 16a, 16b, 16c miteinander verbunden.

Des Weiteren illustriert FIG 1 schematisch ein Beispiel eines Verfahrens 100 zum Betrieb des darin dargestellten Ausführungsbeispiels. Dabei sieht das Beispiel des Verfahrens 100 vor, dass mittels wenigstens eines der zwei in einem Fahrzeugabschnitt 22 angeordneten Netzwerkschalters 18 die drei Netzwerke zweiter Art 14a, 14b, 14c nachgebildet werden 102.

Dabei werden zum Zwecke eines Nachbildens 102 der drei Netzwerke zweiter Art 14a, 14b, 14c mittels des wenigstens einen Netzwerkschalters 18 die Redundanzprotokolle eines jeden der drei Netzwerke zweiter Art 14a, 14b, 14c nachgebildet 102. Des Weiteren ist denkbar, dass eine Netzwerktopologie des Netzwerks zweiter Art 14a, 14b, 14c mittels des genannten Netzwerkschalters 18 nachgebildet wird 102. Zu diesem Zweck kann mittels eines Netzwerkschalters 18 des Netzwerks erster Art 12 beispielsweise ein Redundanzmanager, ein RSTP-Netzwerkschalter, ein MSTP-Netzwerkschalter, ein Access-Netzwerkschalter und/oder ein Ethernet-Train-Backbone-Netzwerkschalter nachgebildet werden 102.

Vorliegend ist ein Netzwerkschalter 18 des Netzwerks erster Art 12 beispielhaft dazu eingerichtet, verschiedene Netzwerke zweiter Art 14a, 14b, 14c nebenläufig nachzubilden 102. Hierzu sind die genannten Netzwerkschalter 18 vorzugsweise als Emulator im Sinne der Computertechnik ausgebildet. Der Übersichtlichkeit halber wird im Folgenden zunächst ein Nachbilden 102 des Train-Communication-Netzwerks durch die zwei in einem Fahrzeugabschnitt 22 angeordneten Netzwerkschalter 18 näher erläutert. Daraufhin wird des Weiteren ein Nachbilden 102 des Train-Operation-Netzwerks durch dieselben zwei Netzwerkschalter 18 näher erläutert. Alternativ ist denkbar, dass mittels verschiedener Netzwerkschalter 18 vorbestimmte Netzwerke der verschiedenen Netzwerke zweiter Art 14a, 14b, 14c nachgebildet werden.

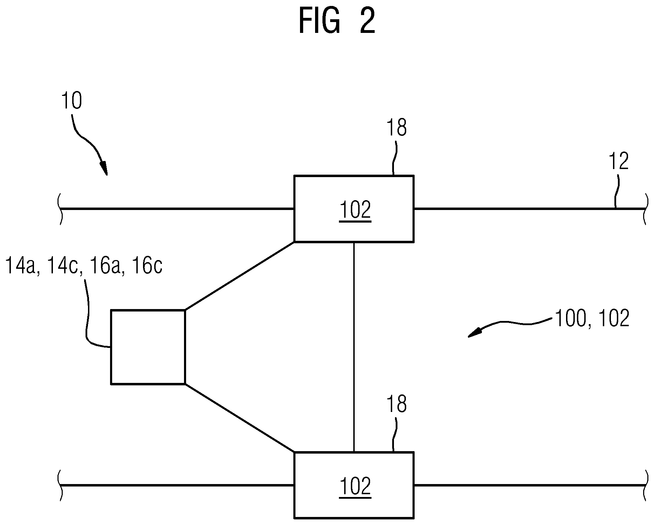

Zum Zwecke eines Nachbildens 102 des als Train-Communication-Netzwerk ausgebildeten Netzwerks zweiter Art 14a wird beispielhaft mittels eines der zwei in FIG 2 gezeigten Netzwerkschalter 18 des Netzwerks erster Art 12 MRP als Redundanzprotokoll nachgebildet 102. Dies ermöglicht es, Profinet-Netzwerkteilnehmer des Train-Communication-Netzwerks an die H-Topologie des Netzwerks erster Art 12 anzubinden. Dabei wird mittels des genannten Netzwerkschalters 18 ein Redundanzmanager nachgebildet 102. Auf diese Weise können die üblicherweise zirkulierenden MRP Test-Pakete innerhalb eines Netzwerksabschnitts 16a des Train-Communication-Netzwerks zirkulieren. Ferner ist denkbar, dass Daten aus dem Netzwerkabschnitt 16a sowie MRP Test-Pakete aus diesem Netzwerkabschnitt 16a hin zu weiteren Netzwerkabschnitten 16a des Train-Communication-Netzwerks in benachbarte Fahrzeugabschnitte 22 übertragen werden. Zu diesem Zwecke kann beispielsweise ein eigenes VLAN eingerichtet werden. Daten oder MRP Test-Pakete aus dem Netzwerkabschnitt 16a werden dabei beispielhaft auf eine dem Fachmann bekannte Weise als aus dem Train-Communication-Netzwerk stammende Daten markiert. Alternativ oder zusätzlich kann mittels der Netzwerkschalter 18 ein MRP Test-Paket anhand von Headerinformationen erkannt werden und zu weiteren Netzwerkabschnitten 16a in andere Fahrzeugabschnitte 22 weitergeleitet werden. Aus Sicht eines Netzwerkteilnehmers des Train-Communication-Netzwerks bilden die mehreren Netzwerkabschnitte 16a auf diese Weise ein zusammenhängendes Train-Communication-Netzwerk. Eine Anbindung an die H-Topologie des Netzwerks erster Art 12 kann daher ohne Einfluss auf den Betrieb des Train-Communication-Netzwerks implementiert werden. Dabei kann zusätzlich erreicht werden, dass an Übergängen zwischen benachbarten Fahrzeugabschnitten 22 allein zwei Verbindungsleitungen zwischen den Netzwerkschaltern 18 des Netzwerks erster Art 12 montiert werden müssen. Auf eine Verbindung von bis zu sechs Verbindungsleitungen der einzelnen Netzwerke zweiter Art 14a, 14b, 14c kann stattdessen vorteilhaft verzichtet werden.

Im Hinblick auf eine Anbindung eines Train-Operation-Netzwerks als Netzwerk zweiter Art 14c sind die Netzwerkschalter 18 dazu eingerichtet, ein STP oder ein darauf basierendes MSTP oder RSTP als Redundanzprotokoll nachzubilden 102. Beispielhaft werden mittels einem der genannten Netzwerkschalter 18 BPDU in den Netzwerkabschnitt 16c des Train-Operation-Netzwerks ausgegeben, welche jeweils eine hochpriore root-ID aufweisen. Gemäß den einem Fachmann bekannten Auswahlregeln wird auf diese Weise dieser Netzwerkschalter 18 als ein root-Netzwerkschalter ausgewählt. Der weitere Netzwerkschalter 18 dient dabei dem vorhergehend beschriebenen Netzwerkschalter 18 als nachrangiger Netzwerkschalter 18, welcher im Falle eines Ausfalls des als root-Netzwerkschalter agierenden Netzwerkschalters 18 als neuer root-Netzwerkschalter von den Netzwerkschaltern des als Train-Operation-Netzwerks ausgebildeten Netzwerks zweiter Art 14c ausgewählt wird. Des Weiteren ist denkbar, dass Daten oder BPDU des Netzwerkabschnitts 16c mittels des Netzwerks erster Art 12 hin zu weiteren Netzwerkabschnitten 16c in anderen Fahrzeugabschnitten 22 auf die im Zusammenhang mit dem Train-Communication-Netzwerk als Netzwerk zweiter Art 14a beschriebene Art übertragen werden.

Unabhängig vom grammatikalischen Geschlecht eines bestimmten Begriffes sind Personen mit männlicher, weiblicher oder anderer Geschlechteridentität mit umfasst.

## Patentansprüche

1. Netzwerksystem (10) mit
- einem Netzwerk erster Art (12);
- mindestens zwei Netzwerken zweiter Art (14a, 14b, 14c), welche jeweils mehrere voneinander getrennte Netzwerkabschnitte (16a, 16b, 16c) aufweisen, die mittels wenigstens eines Netzwerkschalters (18) des Netzwerks erster Art (12) zum Zwecke einer Datenübertragung miteinander verbunden sind,
daurch gekennzeichnet, dass
der mindestens eine Netzwerkschalter (18) des Netzwerks erster Art (12) dazu eingerichtet ist, ein Netzwerk zweiter Art (14a, 14b, 14c) nachzubilden, wobei der mindestens eine Netzwerkschalter (18) als Emulator ausgebildet ist.

2. Netzwerksystem (10) nach Anspruch 1,
**dadurch gekennzeichnet, dass**
die Netzwerkschalter (18) des Netzwerks erster Art (12) gemäß einer H-Topologie miteinander verbunden sind.

3. Netzwerksystem (10) nach einem der vorhergehenden Ansprüche,
**dadurch gekennzeichnet, dass**
eine Netzwerktopologie des Netzwerks zweiter Art (14a, 14b, 14c) verschieden ist von einer Netzwerktopologie des Netzwerks erster Art (12).

4. Netzwerksystem (10) nach einem der vorhergehenden Ansprüche,
**dadurch gekennzeichnet, dass**
zwei Netzwerkabschnitte (16a, 16b, 16c) der mehreren voneinander getrennten Netzwerkabschnitte (16a, 16b, 16c) eines Netzwerks zweiter Art (14a, 14b, 14c) mittels wenigstens zwei Netzwerkschaltern (18) des Netzwerks erster Art (12) miteinander verbunden sind.

5. Fahrzeug (20) aufweisend:
- ein Netzwerksystem (10) nach einem der vorhergehenden Ansprüche;
- mehrere Fahrzeugabschnitte (22), in welchen jeweils wenigstens ein Netzwerkschalter (18) des Netzwerks erster Art (12) des genannten Netzwerksystems (10) angeordnet ist und in welchen jeweils ein Netzwerkabschnitt (16a, 16b, 16c) der jeweils mehreren voneinander getrennten Netzwerkabschnitte (16a, 16b, 16c) der mindestens zwei Netzwerke zweiter Art (14a, 14b, 14c) des genannten Netzwerksystems (10) angeordnet ist, **dadurch gekennzeichnet, dass** der mindestens eine Netzwerkschalter (18) des Netzwerks erster Art (12) dazu eingerichtet ist, ein Netzwerk zweiter Art (14a, 14b, 14c) nachzubilden, wobei der mindestens eine Netzwerkschalter (18) als Emulator ausgebildet ist.

6. Fahrzeug (20) nach Anspruch 5,
**dadurch gekennzeichnet, dass**
Netzwerkabschnitte (16a, 16b, 16c) des Netzwerks zweiter Art (14a, 14b, 14c), welche in unmittelbar benachbarten Fahrzeugabschnitten (22) angeordnet sind, mittels wenigstens eines ersten Netzwerkschalters (18) des Netzwerks erster Art (12), welcher in einem ersten der benachbarten Fahrzeugabschnitte (22) angeordnet ist, und wenigstens einem weiteren Netzwerkschalter (18) des Netzwerks erster Art (12), welcher in einem weiteren der benachbarten Fahrzeugabschnitte (22) angeordnet ist, zum Zwecke eine Datenübertragung verbunden ist.

7. Verfahren (100) zum Betrieb eines Netzwerksystems (10) nach einem der Ansprüche 1 bis 4 sowie eines Fahrzeugs (20) mit diesem Netzwerksystem (10) nach einem der Ansprüche 5 oder 6, wobei
- das Netzwerksystem (10) mit einem Netzwerk erster Art (12) und mindestens zwei Netzwerken zweiter Art (14a, 14b, 14c) betrieben wird, wobei die mindestens zwei Netzwerke zweiter Art (14a, 14b, 14c) jeweils mehrere voneinander getrennte Netzwerkabschnitte (16a, 16b, 16c) aufweisen, die mittels wenigstens eines Netzwerkschalters (18) des Netzwerks erster Art (12) zum Zwecke einer Datenübertragung miteinander verbunden werden,
- **dadurch gekennzeichnet, dass** der mindestens eine Netzwerkschalter (18) des Netzwerks erster Art, ein Netzwerk zweiter Art (14a, 14b, 14c) nachbildet (102), wobei der mindestens eine Netzwerkschalter (18) als Emulator arbeitet.

8. Verfahren (100) nach Anspruch 7,
bei welchem zum Zwecke eines Nachbildens (102) des Netzwerks zweiter Art (14a, 14b, 14c) mittels des wenigstens einen Netzwerkschalters (18) des Netzwerks erster Art (12) Netzwerkprotokolle des Netzwerks zweiter Art (14a, 14b, 14c) nachgebildet werden (102).

9. Verfahren (100) nach einem der Ansprüche 7 oder 8,
bei welchem zum Zwecke eines Nachbildens (102) des Netzwerks zweiter Art (14a, 14b, 14c) mittels des wenigstens einen Netzwerkschalters (18) des Netzwerks erster Art (12) Redundanzprotokolle des Netzwerks zweiter Art (14a, 14b, 14c) nachgebildet werden (102).

10. Verfahren (100) nach einem der Ansprüche 7 bis 9,
bei welchem zum Zwecke eines Nachbildens (102) des Netzwerks zweiter Art (14a, 14b, 14c) mittels des wenigstens einen Netzwerkschalters (18) des Netzwerks erster Art (12) eine Netzwerktopologie des Netzwerks zweiter Art (14a, 14b, 14c) nachgebildet wird (102).

11. Verfahren (100) nach einem der Ansprüche 7 bis 10,
bei welchem zum Zwecke eines Nachbildens (102) des Netzwerks zweiter Art (14a, 14b, 14c) mittels des wenigstens einen Netzwerkschalters (18) des Netzwerks erster Art (12) ein Redundanzmanager, ein RSTP-Netzwerkschalter (18), ein MSTP-Netzwerkschalter (18), ein Access-Netzwerkschalter (18) und/oder ein Ethernet-Train-Backbone-Netzwerkschalter (18) nachgebildet wird (102).

12. Verfahren (100) nach einem der Ansprüche 7 bis 11,
bei welchem wenigstens zwei Netzwerkschalter (18) des Netzwerks erster Art (12) zum Zwecke eines Nachbildens (102) des Netzwerks zweiter Art (14a, 14b, 14c) vorgesehen werden.

13. Computerprogramm, welches bei dessen Ausführung auf einem Computer das Netzwerksystem (10) nach einem der Ansprüche 1 bis 4 dazu veranlasst, das Verfahren (100) nach einem der Ansprüche 7 bis 12 durchzuführen.

14. Computerlesbares Medium aufweisend Instruktionen, welche, wenn sie auf einem Computer ausgeführt werden, das Netzwerksystem (10) nach einem der Ansprüche 1 bis 4 dazu veranlassen, das Verfahren (100) nach einem der Ansprüche 7 bis 12 durchzuführen.

## Claims

1. Network system (10) with
- a network of a first type (12);
- at least two networks of a second type (14a, 14b, 14c), which each have multiple network sections (16a, 16b, 16c) which are separate from one another and are interconnected by means of at least one network switch (18) of the network of the first type (12) for the purpose of a data transfer,
**characterised in that**
the at least one network switch (18) of the network of the first type (12) is configured to emulate a network of the second type (14a, 14b, 14c), wherein the at least one network switch (18) is embodied as an emulator.

2. Network system (10) according to claim 1,
**characterised in that**
the network switches (18) of the network of the first type (12) are interconnected according to an H-topology.

3. Network system (10) according to one of the preceding claims,
**characterised in that**
a network topology of the network of the second type (14a, 14b, 14c) is different from a network topology of the network of the first type (12).

4. Network system (10) according to one of the preceding claims,
**characterised in that**
two network sections (16a, 16b, 16c) of the multiple network sections (16a, 16b, 16c) of a network of the second type (14a, 14b, 14c) that are separate from one another are interconnected by means of at least two network switches (18) of the network of the first type (12).

5. Vehicle (20) having:
- a network system (10) according to one of the preceding claims;
- multiple vehicle sections (22), in which at least one network switch (18) of the network of the first type (12) of the said network system (10) is arranged in each case and in which a network section (16a, 16b, 16c) of the multiple network sections (16a, 16b, 16c), which are separate from one another in each case, of the at least two networks of the second type (14a, 14b, 14c) of the said network system (10) is arranged in each case, **characterised in that**
the at least one network switch (18) of the network of the first type (12) is configured to emulate a network of the second type (14a, 14b, 14c), wherein the at least one network switch (18) is embodied as an emulator.

6. Vehicle (20) according to claim 5,
**characterised in that**
network sections (16a, 16b, 16c) of the network of the second type (14a, 14b, 14c), which are arranged in immediately adjacent vehicle sections (22), are, for the purpose of a data transfer, connected by means of at least one first network switch (18) of the network of the first type (12), which is arranged in a first of the adjacent vehicle sections (22), and at least one further network switch (18) of the network of the first type (12), which is arranged in a further of the adjacent vehicle sections (22).

7. Method (100) for the operation of a network system (10) according to one of claims 1 to 4 as well as of a vehicle (20) with said network system (10) according to one of claims 5 or 6, wherein
- the network system (10) is operated with a network of the first type (12) and at least two networks of the second type (14a, 14b, 14c), wherein the at least two networks of the second type (14a, 14b, 14c) each have multiple network sections (16a, 16b, 16c) which are separate from one another and are interconnected by means of at least one network switch (18) of the network of the first type (12) for the purpose of a data transfer,
- **characterised in that**
the at least one network switch (18) of the network of the first type emulates (102) a network of the second type (14a, 14b, 14c), wherein the at least one network switch (18) acts as an emulator.

8. Method (100) according to claim 7,
in which, for the purpose of emulating (102) the network of the second type (14a, 14b, 14c) by means of the at least one network switch (18) of the network of the first type (12), network protocols of the network of the second type (14a, 14b, 14c) are emulated (102).

9. Method (100) according to one of claims 7 or 8,
in which, for the purpose of emulating (102) the network of the second type (14a, 14b, 14c) by means of the at least one network switch (18) of the network of the first type (12), redundancy protocols of the network of the second type (14a, 14b, 14c) are emulated (102).

10. Method (100) according to one of claims 7 to 9,
in which, for the purpose of emulating (102) the network of the second type (14a, 14b, 14c) by means of the at least one network switch (18) of the network of the first type (12), a network topology of the network of the second type (14a, 14b, 14c) is emulated (102).

11. Method (100) according to one of claims 7 to 10,
in which, for the purpose of emulating (102) the network of the second type (14a, 14b, 14c) by means of the at least one network switch (18) of the network of the first type (12), a redundancy manager, a RSTP network switch (18), an MSTP network switch (18), an access network switch (18) and/or an Ethernet train backbone network switch (18) is emulated (102).

12. Method (100) according to one of claims 7 to 11,
in which at least two network switches (18) of the network of the first type (12) are provided for the purpose of emulating (102) the network of the second type (14a, 14b, 14c).

13. Computer program which, when it is executed on a computer, prompts the network system (10) according to one of claims 1 to 4 to perform the method (100) according to one of claims 7 to 12.

14. Computer-readable medium having instructions which, when they are executed on a computer, prompt the network system (10) according to one of claims 1 to 4 to perform the method (100) according to one of claims 7 to 12.

## Revendications

1. Système (10) de réseau comprenant
- un réseau d'un premier type (12) ;
- au moins deux réseaux d'un deuxième type (14a, 14b, 14c), qui ont chacun plusieurs parties (16a, 16b, 16c) de réseau séparées les unes des autres, lesquelles sont, au moyen d'au moins un commutateur (18) de réseau du réseau du premier type (12), reliées entre elles à des fins de transmission de données,
**caractérisé en ce que**
le au moins un commutateur (18) de réseau du réseau du premier type (12) est agencé pour simuler un réseau du deuxième type (14a, 14b, 14c), dans lequel le au moins un commutateur (18) de réseau est constitué en émulateur.

2. Système (10) de réseau suivant la revendication 1,
**caractérisé en ce que**
les commutateurs (18) de réseau du réseau du premier type (12) sont connectés entre eux, conformément à une topologie H.

3. Système (10) de réseau suivant l'une des revendications précédentes,
**caractérisé en ce qu'**
une topologie de réseau du réseau du deuxième type (14a, 14b, 14c) est différente d'une topologie de réseau du réseau du premier type (12).

4. Système (10) de réseau suivant l'une des revendications précédentes,
**caractérisé en ce que**
deux parties (16a, 16b, 16c) de réseau des plusieurs parties (16a, 16b, 16c) de réseau, séparées les unes des autres, d'un réseau du deuxième type (14a, 14b, 14c) sont connectées entre elles, au moyen d'au moins deux commutateurs (18) de réseau du réseau du premier type (12).

5. Véhicule (20) comportant :
- un système (10) de réseau suivant l'une des revendications précédentes ;
- plusieurs parties (22) de véhicule, dans lesquelles est disposé respectivement au moins un commutateur (18) de réseau du réseau du premier type (12) dudit système (10) de réseau et dans lesquelles, respectivement, une partie (16a, 16b, 16c) de réseau des respectivement plusieurs parties (16a, 16b, 16c) de réseau, séparées les unes des autres, des au moins deux réseaux du deuxième type (14a, 14b, 14c) dudit système (10) de réseau, est disposée, **caractérisé en ce que**
le au moins un commutateur (18) de réseau du réseau du premier type (12) est agencé pour simuler un réseau du deuxième type (14a, 14b, 14c), dans lequel le au moins un commutateur (18) de réseau est constitué en émulateur.

6. Véhicule (20) suivant la revendication 5,
**caractérisé en ce que**
des parties (16a, 16b, 16c) de réseau du réseau du deuxième type (14a, 14b, 14c), qui sont directement voisines de parties (22) de véhicule sont, au moyen d'un premier commutateur (18) de réseau du réseau du premier type (12), lequel est disposé dans une première des parties (22) voisines du véhicule, et d'au moins un autre commutateur (18) de réseau du réseau du premier type (12), lequel est disposé dans une autre des parties (22) voisines du véhicule, connectées à des fins de transmission de données.

7. Procédé (100) pour faire fonctionner un système (10) de réseau suivant l'une des revendications 1 à 4, ainsi qu'un véhicule (20) ayant ce système (10) de réseau suivant l'une des revendications 5 ou 6, dans lequel
- on fait fonctionner le système (10) de réseau avec un réseau du premier type (12) et au moins deux réseaux du deuxième type (14a, 14b, 14c), dans lequel les au moins deux réseaux du deuxième type (14a, 14b, 14c) ont chacun plusieurs parties (16a, 16b, 16c) de réseau, séparées les unes des autres, qui, au moyen d'au moins un commutateur (18) de réseau du réseau du premier type (12), sont connectées entre elles à des fins de transmission de données,
- **caractérisé en ce que**
le au moins un commutateur (18) de réseau du réseau du premier type simule (102) un réseau du deuxième type (14a, 14b, 14c), dans lequel le au moins un commutateur (18) de réseau travaille en émulateur.

8. Procédé (100) suivant la revendication 7,
dans lequel afin de simuler (102) le réseau du deuxième type (14a, 14b, 14c), on simule (102), au moyen du au moins un commutateur (18) de réseau du réseau du premier type (12), des protocoles de réseau du réseau du deuxième type (14a, 14b, 14c).

9. Procédé (100) suivant l'une des revendications 7 ou 8,
dans lequel à des fins de simuler (102) le réseau du deuxième type (14a, 14b, 14c), on simule (102), au moyen du au moins un commutateur (18) de réseau du réseau du premier type (12), des protocoles redondants du réseau du deuxième type (14a, 14b, 14c).

10. Procédé (100) suivant l'une des revendications 7 à 9,
dans lequel, à des fins de simuler (102) le réseau du deuxième type (14a, 14b, 14c), on simule (102), au moyen du au moins un commutateur (18) de réseau du réseau du premier type (12), une topologie de réseau du réseau du deuxième type (14a, 14b, 14c).

11. Procédé (100) suivant l'une des revendications 7 à 10,
dans lequel afin de simuler (102) le réseau du deuxième type (14a, 14b, 14c), on simule (102), au moyen du au moins un commutateur (18) de réseau du réseau du premier type (12), un gestionnaire redondant, un commutateur (18) de réseau RSTP, un commutateur (18) de réseau MSTP, un commutateur (18) de réseau d'accès et/ou un commutateur (18) de réseau Ethernet-Train-Backbone.

12. Procédé (100) suivant l'une des revendications 7 à 11,
dans lequel on prévoit au moins deux commutateurs (18) de réseau du réseau du premier type (12), afin de simuler (102) le réseau du deuxième type (14a, 14b, 14c).

13. Programme d'ordinateur, qui, lors de son exécution sur un ordinateur, fait que le système (10) de réseau suivant l'une des revendications 1 à 4, exécute le procédé (100) suivant l'une des revendications 7 à 12.

14. Support déchiffrable par ordinateur, comprenant des instructions, qui, lorsqu'elles sont exécutées sur un ordinateur, font que le système (10) de réseau suivant l'une des revendications 1 à 4, exécute le procédé (100) suivant l'une des revendications 7 à 12.
